# EUROPEAN PATENT SPECIFICATION

(11) **EP 1 614 275 B1**
(45) Date of publication and mention of the grant of the patent: **10.04.2013**
(21) Application number: 04727058.2
(22) Date of filing: 13.04.2004
(51) Int. Cl.: H04L 12/66

(54) **REAL-TIME COMMUNICATIONS BETWEEN TELEPHONE AND INTERNET USERS**
ECHTZEITKOMMUNIKATION ZWISCHEN TELEFON- UND INTERNETBENUTZERN
COMMUNICATIONS EN TEMPS REEL ENTRE DES UTILISATEURS DU TELEPHONE ET D'INTERNET

(30) Priority: 11.04.2003 GB 0308432
(43) Date of publication of application: 11.01.2006
(73) Proprietor: Hutchison Whampoa Three G IP (Bahamas) Limited, Nassau, New Providence (BS)
(72) Inventor: BOLE-FEYSOT, Yann, F-78750 Mareil Marly (FR)
(74) Representative: Jennings, Michael John
(86) International application number: PCT/GB2004/001702
(87) International publication number: WO 2004/091174

(56) References cited:
- EP-A- 1 071 268
- EP-A- 1 111 532
- WO-A-02/093838

## Description

The present invention relates to the establishment of real-time communications between users of mobile telephones and users of the Internet or an analogous packet switched network. In particular the present invention relates to a new dialling mechanism for 3G mobile telephones.

### Background to the Invention

One of the features of 3G mobile communications is the provision of video calls between two 3G videophones. A 3G user contacts a remote phone by dialling the E.164 number of the contact (as for voice calls). This number can be accessed from the local Contact list application on the handset, if it has been previously stored. E.164 is the ITU-T Recommendation which defines the international public telecommunication numbering plan. E.164 numbers are the standard format used in the international telephone system (e.g. +44 7782221234). The ITU is the International Telecommunication Union and the ITU-T is the Telecommunications Standardisation Sector of the ITU. After entering this number, the user presses the call button and the phone will send a request to the Network to set up a bearer with the remote party. The number of the remote party ("Called party" or "B party" number) is included in the initial "call set up" message sent by the call originating handset This is defined in 3GPP R99 TS 24.008 : Core Network Protocols - Stage 3. 3GPP is the 3^{rd} Generation Partnership Project. The Network will then analyse the Called party number and route the request to the relevant network and subscriber.

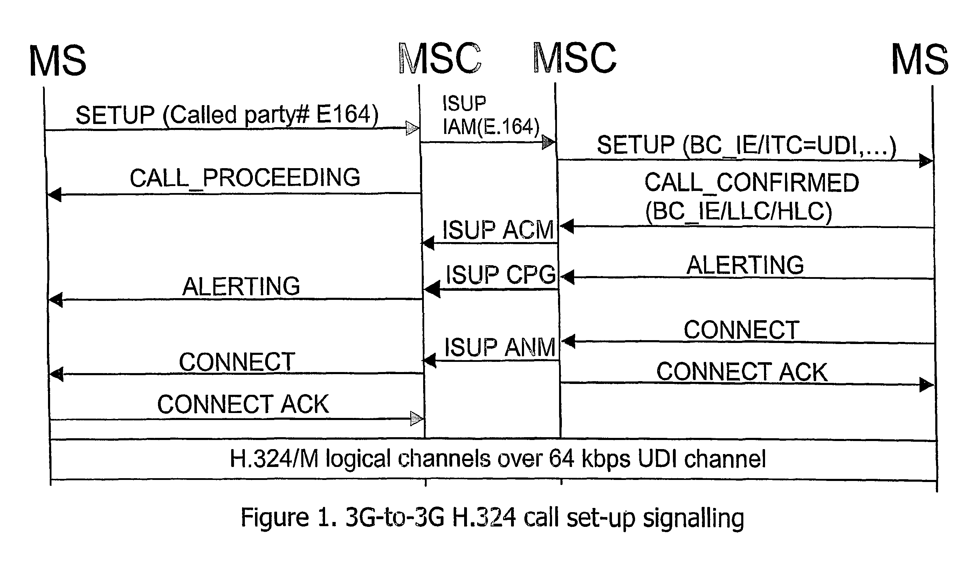

Figure 1 shows the signalling flow for 3G to 3G H.324 call set-up. H.324 is the ITU-T Recommendation for terminals for low bit-rate multimedia communication. The first user initiates a call by sending a call set-up request from their Mobile Station (MS) to a first Mobile Switching Centre (MSC); SETUP (Called party# E.164). The first MSC then sends an Integrated Services User Part (ISUP) Initial Address Message (IAM) E.164 to a second MSC. The second MSC then sends a set-up message to the second MS; SETUP (BC_IE/ITC=UDI,...). BC stands for Bearer Capability, IE stands for Information Element, ITC stands for Information Transfer Capability and UDI stands for Unrestricted Digital Information. BC information is specific information defining the lower layer characteristics required within the network. Once the second MS has received the SETUP (BC_IE/ITC=UDI,...) it returns to the second MSC call confirmation; CALL CONFIRMED (BC_IE/LLC/HLC). LLC stands for Low Layer Compatibility and HLC stands for High Layer Compatibility. LLC information defines the lower layer characteristics of the terminal and HLC information defines the high layer characteristics of the terminal. Once the second MSC has received the CALL CONFIRMED (BC_IE/LLC/HLC) it sends back to the first MSC an ISUP Address Complete Message (ACM). While attempting to connect the first user to the second user, i.e. while the MSs are ringing, the second MS sends Alerting messages back to the second MSC which sends an ISUP Call Progress (CPG) message to the first MSC which sends and Alerting message back to the first MS. Once the second user answers the call the second MS sends a Connect message back to the second MSC which sends an ISUP Answer Message (ANM) to the first MSC which sends a Connect message back to the first MS. A Connect Acknowledgement is then sent from the first MS to the second MS via the MSCs. The above-described signalling takes place over H.324/M logical channels over a 64 kbps UDI channel.

An anticipated future feature which may be implemented on mobile phones systems is the placing of video calls from mobile terminals to Internet Protocol (IP) based video clients, e.g. Personal Computers (PCs) connected to an IP endpoint.

Conventionally, most IP endpoints on the Internet or Corporate Networks are reachable by routable IP addresses. Routable IP addresses are allocated each time a PC connects to a relevant network. For example, each time a PC connects to an Internet Service Provider (ISP) or to a corporate Local Area Network (LAN), the ISP or Corporate server identifies the PC and allocates the PC a routable IP address. This IP address will be valid for the time of the connection and is likely to be different at the next connection.

The only consistent address available on an IP Network is provided by an alias address such as email address, Session Initiation Protocol (SIP). Unique Resource Identifier (URI), or numbers. SIP is a call control Protocol for IP based communication. This alias address will be mapped to the routable IP address of the PC (when connected to the Network).

Accordingly, if a first user wants to send an email to a second user, the first user only needs to know the email address of the second user and the network will route the email to the correct routable IP address. The user does not need to know the routable IP address of the second user's PC This would be very complicated and not user friendly.

If a 3G mobile terminal is to place a call to a PC the same principle applies. The 3G mobile phone will have to "dial" an alias address. However, the 3GPP and the ITU have not defined any mechanism to allow for this scenario. When a mobile phone initiates a call, it is always expected that the Called Party Number included in the call set-up message will be in the E.164 format and not an email address or any other type of alias address.

This problem could be addressed by allocating an E.164 number to every IP endpoint so that a 3G mobile terminal could "dial" a personal computer, just as it would dial another 3G mobile terminal. This might be feasible for a closed network, e.g. a corporate network, but would not be suitable for the millions of internet users because of the limited number of E.164 numbers available. Furthermore, the E.164 number format is not recognised world wide and therefore E.164 numbers would not enable connections with users throughout the world. A benefit of the internet is its accessibility in remote places and this would be lost.

EP-A-1071268 teaches a telecommunication system that can receive VoIP calls and EP-A-1111532 discloses a method for transporting physical objects.

### Summary of the Invention

The present invention provides a method of establishing a communications link between a first terminal having a dedicated routable address operating in a first network and a second terminal operating in a second network in which each terminal is identified by an alias address to which one of a number of routable addresses may be allocated, in which:
the call set up request from the first terminal includes the address of an interworking function via which calls from the first network for the second network are routed,
the call set up request is routed to the interworking function,
the first terminal also signals to the interworking function the alias address for the terminal on the second network,
the routable address allocated to the alias address is ascertained via the interworking function, and
a link is established between the first and second terminals via the routable address.

Thus, the present invention provides a solution to the above-described problem by providing an Inter-Working Function (IWF) between the first terminal operating in the first network and the second terminal operating in the second network. The first terminal does not have to "dial" an alias address and instead requests that a conventional telephone call (voice or video) be set up with the IWF. The IWF function then sets-up the IP connection with the second terminal on the basis of an alias address sent to the IWF by the first terminal.

Preferably, the address of the IWF and the alias address of the second terminal are included in the call set-up request initially sent from the first terminal to the IWF. This has the advantage of minimising the number of messages exchanged between the calling party, the IWF and the called party before a link is established. However, if the calling party is roaming outside its home network, the alias address included in the call set up request may not be detected and passed on by the foreign network. In this case, it is preferable for the alias address to be signalled to the IWF after a link has been established between the calling party and the IWF. This method would usually be an alternative to the first method mentioned above but may be additional, so that the advantages of fast connection are achieved where possible.

The alias address may be an email address, URI or an E.164 number to which a routable IP address is mapped.

In another aspect, the present invention provides a method of establishing a communications link between a first terminal having a dedicated routable address operating in a first network and a second terminal operating in a second network in which each terminal is identified by an alias address to which one of a number of routable addresses may be allocated, in which:
a routable address is allocated to the alias address of the second terminal and stored at a gatekeeper, a request for a link is initiated by the second terminal, and
the link is established via an interworking function via which calls from the first network for the second network and vice versa are routed.

This is the reverse of the process described above. The second terminal, preferably a PC connected to an IP network, makes a call to a first terminal, preferably a 3G mobile terminal, via an IWF. Thus, the PC does not need to make a conventional telephone call, and instead makes requests an IP connection with the IWF which makes a conventional telephone call to the 3G mobile terminal on the basis of information contained in the request.

Preferably, if the network maintains a function mapping alias addresses to routable IP addresses, this function can be used to provide the user of the alias address with information relating to the calling party (equivalent to Calling Line Identity Presentation (CLIP)).

### Brief description of the drawings

So that the present invention may be more readily understood embodiments thereof will now be described by way of example only and with reference to the accompanying drawings in which:
Figure 1 is a diagram of call set up signalling between two mobile terminals denoted by E.164 numbers;

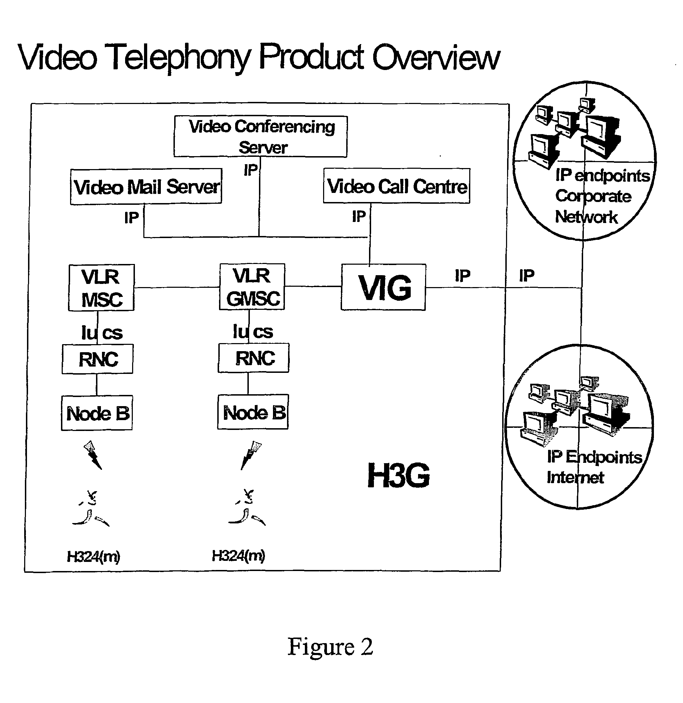

Figure 2 is an overview of a typical communications network which will use the present invention;
Figure 3 is a diagram of an example of call set up signalling according to the invention; and
Figure 4 is a diagram of a second example of call set up according to the invention.
Figure 5 is a diagram of a call set up from IP endpoint to the mobile terminal with calling party identity presentation

### Detailed description of the preferred embodiments of the Invention

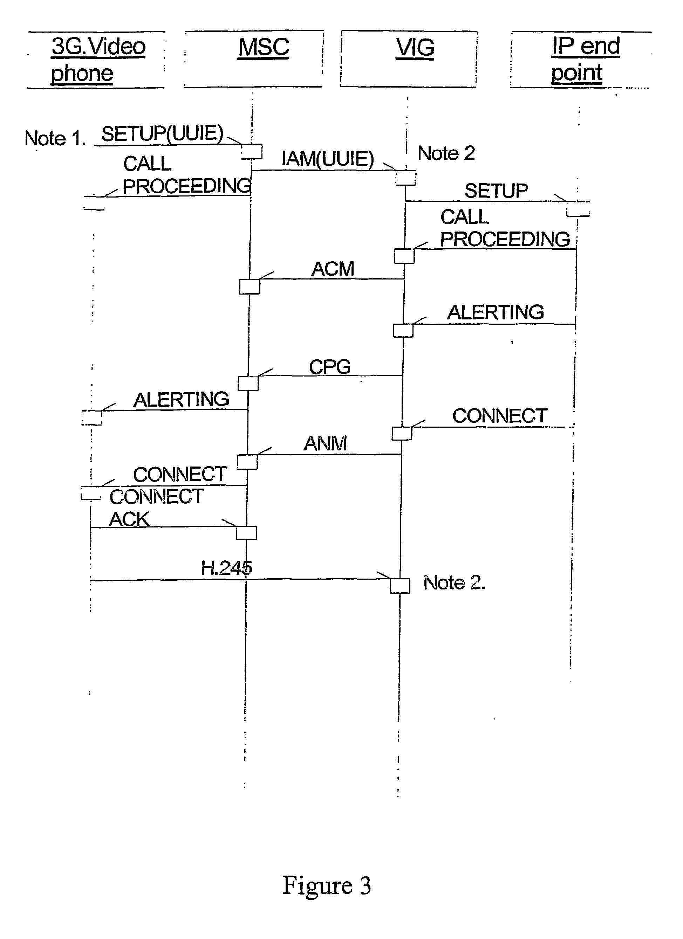

The method comprises two main stages as shown in Figure 3. The first stage is the establishment of a connection between a 3G mobile terminal and a Video Interactive Gateway (VIG) and the second stage is the establishment of a connection between the VIG and a PC (or other IP endpoint). The first stage is initiated as follows. The 3G mobile terminal user may have previously entered in the contact list on the handset, relevant information about the "callee" (e.g. Mobile number, Fixed line number, Fax number , home email address, work email address). Through the contact list, the user will choose the name of the person he or she wants to contact, and then choose the way he wants to communicate with that person. Alternatively the user may simply enter an email address of another user into the phone. By choosing from the contact details or entering into the phone an Email address, the user will have two options. Either they can send an email or they can Initiate a Call to the chosen email address. The latter will initiate the stages mentioned above and described below.

The first stage is the establishment of a connection between a 3G mobile terminal and the VIG. The VIG is an Inter-Working Function (IWF). This element of the Core Network provides a link between the Circuit Switched domain of the 3G Network and other Packet based Networks using IP as a transport protocol and allows video telephony between endpoints operating on the different networks. In the present case, the Inter-Working will be between the 3G Circuit-Switched Network where 3G-H324M terminals operate, and the Packet-Switched IP Network (Internet or IP Corporate LAN) where H323 / SIP terminals operate. The VIG will provide some protocol conversion and transcoding function if necessary.

A 3G.324M terminal is an H.324 terminal following the specifications stated in 3GPP R99 TS 24.008 : Core Network Protocols - Stage 3 mentioned above, utilising mobile adaptations of the multiplexing layer in ITU-T H.223 and is hereafter referenced as a 3G-324M terminal for simplicity.

H.323 is a protocol for IP based video conferencing. This protocol is composed of several specific protocols relating to Audio and Video Codecs, Call Control, etc. A Codec is a coder/decoder used to convert audio or video signals to/from digital format.

Referring to Figure 3, when a user of a 3G mobile terminal requests that a call is set-up to an IP endpoint the 3G mobile terminal sends a standard call set-up message to the network with the Called Party Number being the E.164 number of the VIG (in the same way as it would do when calling another mobile phone). The VIG number may be pre-provisioned and stored on the handset. The user of the 3G mobile terminal does not necessarily require any knowledge of this number.

The call set-up message also includes the alias address of the IP endpoint the 3G mobile terminal user is trying to connect. The alias address is then intercepted by the VIG, which will check with its H.323 GK(Gatekeeper Function) or a SIP proxy function, whether the called IP endpoint is connected and logged in. This is achieved by querying the relevant database. If the IP endpoint is connected to a relevant network the H.323 GK or SIP Proxy will ascertain from the relevant database which routable IP address has been allocated to the IP endpoint.

Gatekeepers and SIP proxies are call control servers. A Gatekeeper will control H.323 based communications whereas a SIP proxy will control SIP based communications.

The second stage is the establishment of a connection between the VIG and the IP endpoint. Once the VIG has been informed of the IP endpoint's routable IP address, it will set-up the call on the IP network.

The following notes refer to Figure 3.

Note 1: A 3G mobile terminal dials a short pre-defined Inter-Working Function (IWF) number in the conventional manner. The set-up message includes an alias address for the H.323; SETUP (UUIE). The alias address (e-mail address) is placed inside the User to User Information Element (UUIE). The UUIE is an information element in the SETUP message that 3G terminal sends towards the Mobile Switching Centre (MSC).

By the means of Called Party number analysis, the VIG will realize that this is a two-stage dialling call. Based on the pre-defined IWF number, the VIG will choose a GK where it will send a SETUP message including the alias address from the UUIE. After that, a call is established as a normal one stage dialling call.

Note 2: If the VIG receives an alias address in UUIE as part of Initial Address Message (IAM) VIG will expect H.245 Terminal Capability Set (TCS) as a first message from the 3G.324M terminal. Any other H.245 message coming as a first message from 3G.324M terminal will be ignored. H.245 is a call control protocol providing end-to-end signalling for proper operation of the H.324 terminal. It provides for capability exchange, signalling of commands and indications, and messages to open and fully describe the content of logical channels. H223is the Multiplex protocol which multiplexes transmitted video, audio, data and control streams into a single bit stream, and demultiplexes a received bit stream into various multimedia streams. In addition, it performs logical framing, sequence numbering, error detection, and error correction by means of retransmission, as appropriate to each media type.

The call set-up message uses a specific field of the set-up message defined in section 10.5.4.25 of 3GPP R99 TS 24.008 : Core Network Protocols - Stage 3 as a UUIE. The UUIE is a multi purpose transport mechanism and is a service defined in the standard and available from equipment providers. However it is not yet commonly used. Depending on the standard adopted, the UUIE provides a frame of several bytes or octets for use as the network operator chooses. To carry out the present invention, the UUIE may be encoded in a variety of different ways. One example is shown below.

The User-User Information element (UUIE) is encoded according to the table below.

| 8 | 7 | 6 | 5 | 4 | 3 | 2 | 1 | |
|---|---|---|---|---|---|---|---|---|
| User-user IEI | | | | | | | | Octet1 |
| Length of user-user contents | | | | | | | | Octet2 |
| User-user protocol discriminator | | | | | | | | Octet3 |
| User-user information 1 | | | | | | | | Octet4 |
| User-user information 2 | | | | | | | | Octet5 |
| ... | | | | | | | | |
| User-user information n-3 | | | | | | | | Octetn |

Octet 1 - Includes Information Element (IE) Identifier code. The code used here is different for Integrated Services User Part (ISUP) and 3G call control protocol.
Octet 2 - Shows the length of the user-to-user contents
Octet 3 - Protocol discriminator for the user-user contents. All bits shall be set to (0) to indicate User specific protocol. That is because octets of user-user contents may include non-IA5 characters.
Octet 4 - First octet of user-user information. User-User Information is a field for exchange of information between two endpoints. The bits of Octet 4 take the following format:
Bit 8: extension, coded as zero (0)
Bit 7: coded as: 0 - for destination address (in case of usage of UUIE for two stage dialling
Bits6-1: Address Type, specifies the address type, coded as integer as follows:

| | |
|---|---|
| 0 - reserved | |
| 1 - email-ID | -- rfc822-compliant email address |
| 2 - url-ID | -- URL style address |
| 3 - h323-ID | -- Basic ISO/IEC 646 |
| 4..63 - spare | |

Octet 4 to n: Address Information, coded depending on the address type as follows:
h323-ID - coded as IA5String consisting of characters as specified in ISO/IEC 646, with the most significant bit set to '0'
url-ID - coded as IA5String consisting of characters as specified in ISO/IEC 646, with the most significant bit set to '0'
email-ID - coded as IA5String consisting of characters as specified in ISO/IEC 646, with the most significant bit set to '0'
Note: If BMPString to IA5String conversion is not possible for h.323 ID at H.323 to 3G324M call, the source address is ignored.

Referring again to Figure 3 which shows the signalling flow from a 3G324M terminal to an H.323 terminal. The first user initiates a call by sending a call set-up request from their Mobile Station (MS) (3G Video phone) to a Mobile Switching Centre (MSC); SETUP (UUIE). The MSC then sends an IAM(UUIE) to a VIG. Following this the MSC sends a CALL PROCEEDING message back to the 3G324M terminal. The VIG then sends a set-up message to the second IP endpoint (H.323 terminal); SETUP. Once the H.323 terminal has received the SETUP it returns to the VIG a call proceeding message; CALL PROCEEDING. Once the VIG has received the CALL PROCEEDING message it sends back to the MSC an ACM. While attempting to connect the first user to the second user, i.e. before the IP endpoint has "picked-up" the call, the IP endpoint sends Alerting messages back to the VIG which sends an CPG message to the MSC which sends and Alerting message back to the 3G324M terminal. Once the second user answers the call the IP endpoint sends a Connect message back to the VIG which sends an ANM to the MSC which sends a Connect message back to the 3G324M terminal. A Connect Acknowledgement is then sent from the 3G324M terminal to the MSC. The 3G324M terminal then sends a H.245 User Input Indication (UII) to the VIG.

The present invention also provides a method for real-time communications between a 3G mobile terminal and an IP endpoint when the 3G mobile terminal is not in its home network, for example, when the 3G mobile terminal user roams internationally on another 3G network. In such circumstances, if a user wants to place a video call with their 3G handset to a PC on an IP network, the mobile terminal will dial the E.164 number of the VIG in the UK (e.g. +44 7782....) and will send the alias address of the PC in the UUIE of the call set-up, as described previously.

The problem is that the probability of the transit Network (i.e. the network used to link the visited 3G Network and the Home 3G network) transporting the UUIE field back to the VIG is low.

This means that a call may be set-up between the 3G mobile terminal and the VIG, but the UUIE and therefore the alias address of the called PC will be lost. As a result the calling customer won't be able to call the IP endpoint.

Thus, preferably some resilience can be added for the transport of the alias address.

This is achieved on the H.324M terminal originating the video call, by inputting the alias address not only in the UUIE (as shown in figure 3), but also in the H.245 User Input Indication (UII) message defined in 3GPP R99 TS 24.008 : Core Network Protocols - Stage 3. This message is used as a transport mechanism once the Unrestricted Digital Information (UDI) bearer has been set up with the VIG. This method is an in-band signalling method which has the advantage of delivering the email address to the VIG when the 3G mobile terminal is in a foreign network or in any other situation where the UUIE may be lost.

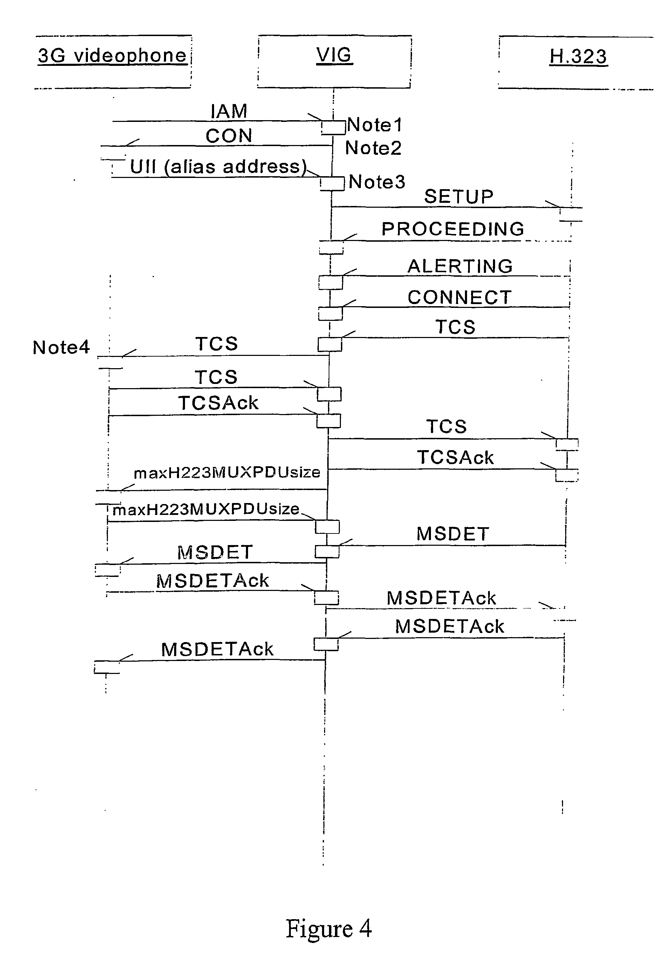

This method is complementary to the UUIE method, and is perceived as a fallback method for international roaming scenarios only. It is not the preferred approach since the bearer on the 3G network has to be set-up prior to the alias address being communicated to the VIG. If the IP endpoint is not logged on (on-line) then the call on the IP leg will not be set-up. However, a UDI bearer set up on the 3G leg, is a chargeable event. As a result, the 3G operator would charge for a video call, without knowing if the call can proceed and be set-up on the IP Network. This is described in Figure 4 and the following notes refer to Figure 4.

Note 1: VIG will realize by the pre-defined number that this is a two-stage dialling call. If the IAM sent from MSC does not include an alias address inside UUIE (e.g. because some exchanges in roaming cases does not support relaying of UUS or if the 3G endpoint does not support the option for sending alias address inside UUIE) the VIG will connect (CON/Connect) the call with 3G terminal without routing the call towards the IP domain.

Note 2: After the call is connected, a multiplex level set-up procedure will be performed.

Note 3: An H.245 User Information Indication (UII) message containing the destination alias address will be the first H.245 message sent by the 3G.324M terminal and the terminal will not send any other H.245 messages until it receives a H.245 TCS message. The reason for that is that the VIG will ignore all H.245 messages except User Information Indication (UII) before the call is connected on the IP side.

Note4: After the 3G terminal receives the H.245 TCS message it can start mandatory H.245 procedures.

In this aspect of the invention, the alias address is included in the UUI message sent after a link has been established. Any suitable coding scheme may be used. One possible scheme is described below:
UserInput:
   alphanumeric <IA5 string>

The alias address and the whole contents of "alphanumeric" parameter shall be encoded as IA5 String consisting of characters as specified in ISO/IEC 646, with the most significant bit set to '0'. Structure of the Alias address inside alphanumeric parameter will be:
<AddressType><:><AliasAddress>
<AddressType> is one or more IA5 characters (digits) that identifies the type of alias address used:
   0 - reserved
   1 - email-ID -- rfc822-compliant email address
   2 - url-ID -- URL style address
   3 - h323-ID -- not restricted to any format
<:> column IA5 character is used to separate AliasAddress from AddressType.
<AlliasAddress> is the actual destination alias address.

### Example:

UserInput
alphanumeric 3:fistname.surname@three.com

Referring again to Figure 4 which shows the signalling flow from a 3G324M terminal to an H.323 terminal in the embodiment of the present invention in which the 3G324M terminal is not in its home network. Firstly an IAM is received by the VIG as described above in Note 1. The call is then connected as described above in Note 2; CON. Next a UII message (alias address) is sent back to the VIG as described above in Note 3. The VIG then sends a set-up message to the second IP endpoint (H.323 terminal); SETUP. Following this the IP endpoint sends a CALL PROCEEDING message back to the VIG. This is followed by ALERTING, CONNECT and Terminal Capability Set (TCS) messages from the IP endpoint to the VIG. The VIG then sends a TCS message to the 3G324M terminal; see note 4 above. The VIG then receives back from the 3G324M terminal a TCS message followed by a TCS Acknowledgement. The VIG then sends back to the IP endpoint a TCS and TCS Acknowledgement. The VIG and 3G324 terminal then exchange maxH223MUXPDUsize information. Following this the H.323 endpoint sends Master Slave Determination (MSDET) information back to the 3G324M terminal via the VIG. This information is then acknowledged back to the H.323 endpoint which in turn acknowledges back to the 3G324M terminal.

In an alternative embodiment of the present invention the IP endpoint initiates a call to a 3G mobile terminal. Preferably the identity of the calling endpoint can be presented to the called endpoint as described in the following.

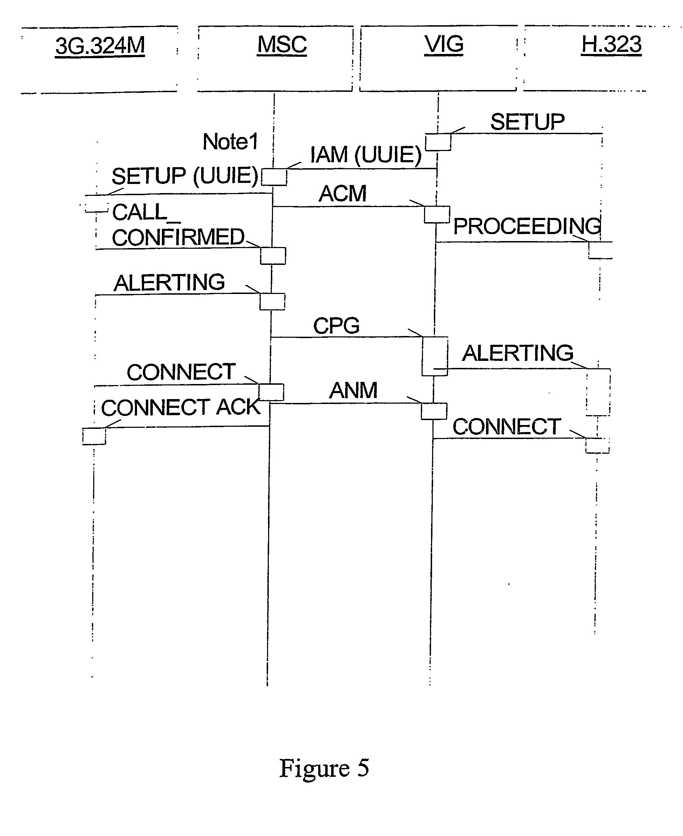

When the call is from the IP endpoint to the 3G mobile terminal endpoint, the VIG can present the calling party identity to the 3G mobile terminal using the UUIE in the call set-up message as shown in Figure 5 and the following note refers to Figure 5.

Note1: The call originates from an IP terminal that is represented by an alias address (e-mail address), it has no E.164 number. The IWF will encode this alias address inside UUIE according as follows:
UUIE can be encoded as described in the table below:

| 8 | 7 | 6 | 5 | 4 | 3 | 2 | 1 | |
|---|---|---|---|---|---|---|---|---|
| User-user IEI | | | | | | | | Octet1 |
| Length of user-user contents | | | | | | | | Octet2 |
| User-user protocol discriminator | | | | | | | | Octet3 |
| User-user information 1 | | | | | | | | Octet4 |
| User-user information 2 | | | | | | | | Octet5 |
| ... | | | | | | | | |
| User-user information n-3 | | | | | | | | Octetn |

Octet 1 - Includes Information Element (IE) Identifier code. The code used here is different for ISUP and 3G call control protocol.
Octet 2 - Shows the length of the user-to-user contents.
Octet 3 - Protocol discriminator for the user-user contents. All bits shall be set to (0) to indicate User specific protocol. This is because octets of user-user contents may include non-IA5 characters.
Octet 4 - First octet of user-user information. The bits of octet 4 take the following format:
Bit 8: extension, coded as zero (0)
Bit 7: coded as 1 - for source address (in case of usage of UUIE for CLIP purposes
Bits6-1: Address Type, specifies the address type, coded as integer as follows:

| | |
|---|---|
| 0 - reserved | |
| 1 - email-ID | -- rfc822-compliant email address |
| 2 - url-ID | -- URL style address |
| 3 - h323-ID | -- Basic ISO/IEC 646 |
| 4..63 - spare | |

Octet 4 to n: Address Information, coded depending on the address type as follows:
h323-ID - coded as IA5String consisting of characters as specified in ISO/IEC 646, with the most significant bit set to '0'
url-ID - coded as IA5String consisting of characters as specified in ISO/IEC 646, with the most significant bit set to '0'
email-ID - coded as IA5String consisting of characters as specified in ISO/IEC 646, with the most significant bit set to '0'
Note: If BMPString to IA5String conversion is not possible for H.323 ID at H.323 to 3G324M call, the source address is ignored.
Bit 7 of the octet 4 of UUIE will be set to 1 to indicate that this is a IP terminal "source address" and it is used for CLIP purpose.

Referring again to Figure 5 which shows the signalling flow from a H.323 terminal to an 3G324M terminal. The first user initiates a call by sending a call set-up request from their H.323 terminal (IP endpoint) to the VIG; SETUP. The VIG then sends an IAM(UUIE) to the MSC; see note 1 above. The MSC then sends a set-up message to the 3G324M terminal (3G video phone); SETUP (UUIE) .Following this the MSC sends an ACM early message back to the VIG. The VIG then sends a PROCEEDING message to the IP endpoint (H.323 terminal). The 3G324M then sends a CALL_CONFIRMED message back to the MSC. While attempting to connect the first user to the second user, i.e. before the 3G mobile terminal has "picked-up" the call, the 3G324M terminal sends Alerting messages back to the MSC which sends Call Progress (CPG) messages back to the VIG which sends an Alerting message back to the H.323 terminal. Once the second user answers the call the 3G324M endpoint sends a Connect message back to the MSC which sends an ANM to the VIG which sends a Connect message back to the H.323 terminal. A Connect Acknowledgement is then sent from the MSC to the 3G324M terminal.
Note: The term Compatibility Information subsumes the entirety of Bearer Capability, Low Layer Compatibility, High Layer Compatibility, Progress Indicator and Address Information conveyed out-of-band prior to call establishment for the support of compatibility checking and terminal/function/service selection at the ISDN (Integrated Services Digital Network )-type user-network interface. ISDN is an network interface subscriber which supports digital or analogue terminals, plus a standardised user to network associated signalling system and a standardized inter-network signalling system.

## Claims

1. A method of establishing a communications link between a first terminal having a dedicated routable address operating in a UMTS network and a second terminal operating in a packet switched network in which each terminal is identified by an alias address, such as an email address, or a universal resource identifier (URI), to which one of a number of routable addresses may be allocated, the method comprising the steps of:
establishing a first connection between the first terminal in the UMTS network and an interworking function in which :
a call set up request from the first terminal includes the address of the interworking function via which calls from the UMTS network for the packet switched network are routed, and
the call set up request is routed to the interworking function,
establishing a second connection between the interworking function and the second terminal in the packet switched network in which:
the first terminal signals to the interworking function the alias address for the terminal in the packet switched network, and
the routable address allocated to the alias address is ascertained via the interworking function,
the communication link being established between the first and second terminals via the routable address based on the first and second connections.

2. A method as claimed in claim 1 in which the alias address of the second terminal is included with the address of the interworking function in the call set up request initially sent from the first terminal to the interworking function.

3. A method as claimed in claim 2 in which the call set up request contains a user to user information element (UUIE) and the alias address of the second terminal is included in the UUIE.

4. A method as claimed in claim 1, 2 or 3 in which the alias address of the second terminal is included in a message sent from the first terminal to the interworking function after a link has been established between the first terminal and the interworking function.

5. A method as claimed in claim 4 in which the alias address is included in the user input indication (UUI) message sent after a link has been established.

6. A method as claimed in claim 1 in which the first terminal and the interworking function are addressable using the same format.

7. A method as claimed in claim 6 in which the first terminal and the interworking function have E. 164 numbers.

8. A method as claimed in Claim 1 wherein said interworking function provides a transcoding function.

9. A method as claimed in Claim 1 wherein said interworking function provides protocol conversion functions.

10. A method as claimed in claim 1 in which the packet switched network operates according to Internet Protocol.

11. A method as claimed in claim 1 in which the address of the interworking function is stored in the first terminal whereby the user needs only to input the alias address.

12. A method of establishing a communications link between a first terminal having a dedicated routable address operating in a UMTS network and a second terminal operating in a packet switched network in which each terminal is identified by an alias address such as an email address, or a universal resource identifier (URI) to which one of a number of routable addresses may be allocated, the method comprising the steps of:
establishing a first connection between the second terminal in the packet switched network and the interworking function in which :
a call set up request for a link to the first terminal is initiated by the second terminal and routed to the interworking function;
establishing a second connection between the interworking function and the first terminal in the UMTS network in which:
the interworking function encodes the call set up request to establish a link to the
first terminal and identifies the second terminal to the first terminal;
the communication link being established between the first and second terminals based on the first and second connections.

13. A method as claimed in claim 12 in which the alias address of the second terminal is presented to the user of the first terminal to identify the second terminal to the first terminal.

## Patentansprüche

1. Verfahren zum Aufbauen einer Kommunikationslink zwischen einem ersten Endgerät mit einer dedizierten routbaren Adresse, das in einem UMTS-Netz arbeitet, und einem zweiten Endgerät, das in einem paketgeschalteten Netzwerk arbeitet, in dem jedes Endgerät anhand einer Alias-Adresse wie z.B. einer Email-Adresse oder eines URI (Universal Resource Identifier) identifiziert wird, der/dem eine aus einer Reihe von routbaren Adressen zugewiesen werden kann, wobei das Verfahren die folgenden Schritte beinhaltet:
Aufbauen einer ersten Verbindung zwischen dem ersten Endgerät im UMTS-Netz und einer Zusammenwirkungsfunktion, bei der:
eine Rufeinrichtungsanforderung vom ersten Endgerät die Adresse der Zusammenwirkungsfunktion beinhaltet, über die Anrufe vom UMTS-Netz für das paketgeschaltete Netzwerk geroutet werden, und
die Rufeinrichtungsanforderung zu der Zusammenwirkungsfunktion geroutet wird,
Aufbauen einer zweiten Verbindung zwischen der Zusammenwirkungsfunktion und dem zweiten Endgerät in dem paketgeschalteten Netzwerk, wobei:
das erste Endgerät der Zusammenwirkungsfunktion die Alias-Adresse für das Endgerät in dem paketgeschalteten Netzwerk signalisiert, und
die der Alias-Adresse zugeordnete routbare Adresse über die Zusammenwirkungsfunktion festgestellt wird,
wobei die Kommunikationslink zwischen dem ersten und zweiten Endgerät über die routbare Adresse auf der Basis der ersten und zweiten Verbindung aufgebaut wird.

2. Verfahren nach Anspruch 1, wobei die Alias-Adresse des zweiten Endgeräts in der Adresse der Zusammenwirkungsfunktion in der anfänglich vom ersten Endgerät zur Zusammenwirkungsfunktion gesendeten Rufeinrichtungsanforderung enthalten ist.

3. Verfahren nach Anspruch 2, wobei die Rufeinrichtungsanforderung ein Benutzer-zu-Benutzer-Informationselement (UUIE) enthält und die Alias-Adresse des zweiten Endgeräts in dem UUIE enthalten ist.

4. Verfahren nach Anspruch 1, 2 oder 3, bei dem die Alias-Adresse des zweiten Endgeräts in einer Nachricht enthalten ist, die vom ersten Endgerät zur Zusammenwirkungsfunktion gesendet wird, nachdem eine Link zwischen dem ersten Endgerät und der Zusammenwirkungsfunktion hergestellt wurde.

5. Verfahren nach Anspruch 4, bei dem die Alias-Adresse in der UII-(User Input Indication)-Nachricht enthalten ist, die nach dem Aufbauen einer Link gesendet wird.

6. Verfahren nach Anspruch 1, bei dem das erste Endgerät und die Zusammenwirkungsfunktion mit demselben Format adressierbar sind.

7. Verfahren nach Anspruch 6, bei dem das erste Endgerät und die Zusammenwirkungsfunktion E. 164 Nummern haben.

8. Verfahren nach Anspruch 1, wobei die genannte Zusammenwirkungsfunktion eine Transcodier-Funktion bietet.

9. Verfahren nach Anspruch 1, wobei die genannte Zusammenwirkungsfunktion Protokollwandlerfunktionen bietet.

10. Verfahren nach Anspruch 1, wobei das paketgeschaltete Netzwerk gemäß Internetprotokoll arbeitet.

11. Verfahren nach Anspruch 1, bei dem die Adresse der Zusammenwirkungsfunktion im ersten Endgerät gespeichert wird, so dass der Benutzer nur die Alias-Adresse einzugeben braucht.

12. Verfahren zum Aufbauen einer Kommunikationslink zwischen einem ersten Endgerät mit einer dedizierten routbaren Adresse, das in einem UMTS-Netz arbeitet, und einem zweiten Endgerät, das in einem paketgeschalteten Netzwerk arbeitet, in dem jedes Endgerät anhand einer Alias-Adresse wie z.B. einer Email-Adresse, oder einem URI (Universal Resource Identifier) identifiziert wird, der/dem eine aus einer Reihe von routbaren Adressen zugewiesen werden kann, wobei das Verfahren die folgenden Schritte beinhaltet:
Aufbauen einer ersten Verbindung zwischen dem zweiten Endgerät in dem paketgeschalteten Netzwerk und der Zusammenwirkungsfunktion, wobei:
eine Rufeinrichtungsanforderung für eine Link zum ersten Endgerät durch das zweite Endgerät eingeleitet und zur Zusammenwirkungsfunktion geroutet wird;
Aufbauen einer zweiten Verbindung zwischen der Zusammenwirkungsfunktion und dem ersten Endgerät in dem UMTS-Netzwerk, wobei:
die Zusammenwirkungsfunktion die Rufeinrichtungsanforderung codiert, um eine Link zum ersten Endgerät aufzubauen, und das zweite Endgerät dem ersten Endgerät identifiziert;
wobei die Kommunikationslink zwischen dem ersten und dem zweiten Endgerät auf der Basis der ersten und zweiten Verbindung aufgebaut wird.

13. Verfahren nach Anspruch 12, wobei die Alias-Adresse des zweiten Endgeräts dem Benutzer des ersten Endgeräts präsentiert wird, um dem ersten Endgerät das zweite Endgerät zu identifizieren.

## Revendications

1. Procédé destiné à établir une liaison de communications entre un premier terminal avec une adresse routable dédiée opérant dans un réseau UMTS et un deuxième terminal opérant dans un réseau à commutation par paquets au sein duquel chaque terminal est identifié par une adresse alias, par exemple une adresse de courriel, ou un identifiant de ressource universel (URI), à laquelle ou auquel peut être attribuée une adresse parmi un certain nombre d'adresses routables, le procédé comprenant les étapes consistant à :
établir une première connexion entre le premier terminal dans le réseau UMTS et une fonction d'interfonctionnement dans laquelle :
une demande d'établissement d'appel provenant du premier terminal englobe l'adresse de la fonction d'interfonctionnement par l'intermédiaire de laquelle sont acheminés des appels émanant du réseau UMTS à destination du réseau à commutation par paquets, et
la demande d'établissement d'appel est acheminée vers la fonction d'interfonctionnement,
établir une deuxième connexion entre la fonction d'interfonctionnement et le deuxième terminal dans le réseau à commutation par paquets dans lequel :
le premier terminal signale à la fonction d'interfonctionnement l'adresse alias pour le terminal situé dans le réseau à commutation par paquets, et
l'adresse routable attribuée à l'adresse alias est vérifiée par l'intermédiaire de la fonction d'interfonctionnement,
la liaison de communication étant établie entre le premier terminal et le deuxième terminal par l'intermédiaire de l'adresse routable sur la base de la première connexion et de la deuxième connexion.

2. Procédé selon la revendication 1, dans lequel l'adresse alias du deuxième terminal est englobée avec l'adresse de la fonction d'interfonctionnement à la demande d'établissement d'appel laquelle a été envoyée initialement depuis le premier terminal vers la fonction d'interfonctionnement.

3. Procédé selon la revendication 2, dans lequel la demande d'établissement d'appel contient un élément d'information entre utilisateurs (UUIE) et l'adresse alias du deuxième terminal est englobée à l'UUIE.

4. Procédé selon la revendication 1, 2 ou 3, dans lequel l'adresse alias du deuxième terminal est englobée à un message lequel est envoyé depuis le premier terminal vers la fonction d'interfonctionnement une fois qu'une liaison a été établie entre le premier terminal et la fonction d'interfonctionnement.

5. Procédé selon la revendication 4, dans lequel l'adresse alias est englobée au message d'indication de saisie utilisateur (UII) envoyé une fois qu'une liaison a été établie.

6. Procédé selon la revendication 1, dans lequel le premier terminal et la fonction d'interfonctionnement sont adressables grâce à l'utilisation du même format.

7. Procédé selon la revendication 6, dans lequel le premier terminal et la fonction d'interfonctionnement ont des numéros E.164.

8. Procédé selon la revendication 1, ladite fonction d'interfonctionnement procurant une fonction de transcodage.

9. Procédé selon la revendication 1, ladite fonction d'interfonctionnement procurant des fonctions de conversion de protocole.

10. Procédé selon la revendication 1, dans lequel le réseau à commutation par paquets opère suivant le protocole internet.

11. Procédé selon la revendication 1, dans lequel l'adresse de la fonction d'interfonctionnement est stockée dans le premier terminal, de ce fait l'utilisateur devant seulement saisir l'adresse alias.

12. Procédé destiné à établir une liaison de communications entre un premier terminal avec une adresse routable dédiée opérant dans un réseau UMTS et un deuxième terminal opérant dans un réseau à commutation par paquets au sein duquel chaque terminal est identifié par une adresse alias, par exemple une adresse de courriel, ou un identifiant de ressource universel (URI), à laquelle ou auquel peut être attribuée une adresse parmi un certain nombre d'adresses routables, le procédé comprenant les étapes consistant à :
établir une première connexion entre le deuxième terminal dans le réseau à commutation par paquets et la fonction d'interfonctionnement dans laquelle :
une demande d'établissement d'appel pour une liaison vers le premier terminal est amorcée par le deuxième terminal et acheminée vers la fonction d'interfonctionnement ;
établir une deuxième connexion entre la fonction d'interfonctionnement et le premier terminal dans le réseau UMTS dans lequel :
la fonction d'interfonctionnement assure le codage de la demande d'établissement d'appel afin d'établir une liaison vers le premier terminal et identifie le deuxième terminal au premier terminal ;
la liaison de communication étant établie entre le premier terminal et le deuxième terminal sur la base de la première connexion et de la deuxième connexion.

13. Procédé selon la revendication 12, dans lequel l'adresse alias du deuxième terminal est présentée à l'utilisateur du premier terminal afin d'identifier le deuxième terminal au premier terminal.
